# EUROPÄISCHE PATENTSCHRIFT

(11) **EP 1 198 491 B1**
(45) Veröffentlichungstag und Bekanntmachung des Hinweises auf die Patenterteilung: **01.10.2003**
(21) Anmeldenummer: 00954469.3
(22) Anmeldetag: 11.07.2000
(51) Int. Cl.: C08G 69/28, C08G 69/00

(54) **VERFAHREN ZUR HERSTELLUNG VON POLYAMIDEN AUS DINITRILEN UND DIAMINEN**
METHOD FOR PRODUCING POLYAMIDES FROM DINITRILES AND DIAMINES
PROCEDE DE PRODUCTION DE POLYAMIDES A PARTIR DE DINITRILES ET DE DIAMINES

(30) Priorität: 30.07.1999 DE 19935398
(43) Veröffentlichungstag der Anmeldung: 24.04.2002
(73) Patentinhaber: BASF AKTIENGESELLSCHAFT, 67056 Ludwigshafen (DE)
(72) Erfinder: OHLBACH, Frank, D-69221 Dossenheim (DE); LUYKEN, Hermann, D-67069 Ludwigshafen (DE)
(86) Internationale Anmeldenummer: EP0006566
(87) Internationale Veröffentlichungsnummer: WO01009224

(56) Entgegenhaltungen:
- EP-A- 0 684 271
- EP-A- 0 702 047
- WO-A-99/38908

## Beschreibung

Die vorliegende Erfindung betrifft ein Verfahren zur Herstellung von Polyamiden aus Dinitrilen und Diaminen und Wasser bei erhöhter Temperatur und erhöhtem Druck.

Aufgabe der vorliegenden Erfindung ist die Bereitstellung eines Verfahrens zur Herstellung von Polyamiden aus Dinitrilen und Diaminen und Wasser, das eine gute Raum-Zeit-Ausbeute und eines einfache Katalysatorabtrennung gewährleistet.

Die Aufgabe wird erfindungsgemäß gelöst durch ein Verfahren zur Herstellung eines Polyamids durch Umsetzung mindestens eines Dinitrils und mindestens eines Diamins mit Wasser bei einer Temperatur von 90 bis 400°C, einem Druck von 0,1 bis 50*106 Pa und einem Molverhältnis von Wasser zu der Summe aus Dinitril und Diamin von mindestens 1:1 in Gegenwart eines heterogenen Katalysators, ausgewählt aus der Gruppe bestehend aus Aluminiumoxid, Zinnoxid, Siliciumoxid, Oxide der zweiten bis sechsten Nebengruppe des Periodensystems, Oxide der Lanthaniden und Aktiniden, Schichtsilikate, Zeolithe.

Weiterhin wird die Aufgabe gelöst durch ein kontinuierliches Verfahren zur Herstellung von Polyamids durch Umsetzung mindestens eines Dinitrils und mindestens eines Diamins mit Wasser, das die folgende Stufen umfaßt:
(1) Umsetzung mindestens eines Dinitrils und mindestens eines Diamins mit Wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein ümsetzungsgemisch erhalten wird,
(2) weitere Umsetzung des Umsetzungsgemischs bei einer Temperatur von 150 bis 400°C und einem Druck, der niedriger ist, als der Druck in Stufe 1, die in Gegenwart eines Brönsted-Säurekatalysators. ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C, und einem Druck von 0,1 bis 30 x 10⁶ Pa, wobei ein Produktgemisch erhalten wird.

Weiterhin wird die Aufgabe gelöst durch ein kontinuierliches Verfahren zur Herstellung eines Polyamids durch Umsetzung mindestens eines Dinitrils und mindestens eines Diamins mit Wasser, das die folgenden Stufen umfaßt:
(1) Umsetzung mindestens eines Dinitrils und mindestens eines Diamins mit Wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil in dem bis zu 40 Gew.-% des Titandioxids durch Wolframoxid ersetzt sein können, enthält, wobei ein ümsetzungsgemisch erhalten wird,
(2) weitere Umsetzung des Umsetzungsgemischs bei einer Temperatur von 150 bis 400°C und einem Druck, der niedriger ist, als der Druck in Stufe 1, die in Gegenwart eines Brönsted-Säurekatalysators, ausgewählt aus einem Beta-Zeolith-, Schichtsilikatoder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Produktgemisch erhalten wird.

Vorzugsweise umfassen die vorstehenden Verfahren zusätzlich folgende Stufe:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flussige oder zweite feste Phase oder ein Gemisch aus zweiter flüssiger und zweiter fester Phase, die (das) jeweils das Polyamid enthält, erhalten werden.

Die Aufgabe wird weiterhin gelöst durch ein kontinuierliches Verfahren zur Herstellung eines Polyamids durch Umsetzung mindestens eines Dinitrils und mindestens eines Diamins mit Wasser, das die folgenden Stufen umfaßt:
(1) Umsetzung mindestens eines Dinitrils und mindestens eines Diamins mit Wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400°C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

Die prinzipielle Vorgehensweise des erfindungsgemäßen Verfahrens ist in der prioritätsälteren, nicht vorveröffentlichten DE-A-19 804 023 beschrieben.

Als Dinitrile können einzeln oder im Gemisch prinzipiell alle Dinitrile, d.h. Verbindungen mit mindestens zwei Nitrilgruppen, eingesetzt werden. Unter diesen sind die alpha,omega-Dinitrile bevorzugt, wobei unter letzteren insbesondere alpha,omega-Alkylendinitrile mit 3 bis 12 C-Atomen, weiter bevorzugt 3 bis 9 C-Atomen im Alkylenrest, oder Alkylaryldinitrile mit 7 bis 12 C-Atomen eingesetzt werden, wobei dort solche bevorzugt werden, die zwischen der aromatischen Einheit und den beiden Nitrilgruppen eine Alkylengruppe mit mindestens einem C-Atom aufweisen. Unter den Alkylaryldinitrilen sind insbesondere solche bevorzugt, die die beiden Nitrilgruppen in 1,4-Stellung zueinander aufweisen.

Als alpha,omega-Alkylendinitrile setzt man weiter bevorzugt lineare alpha,omega-Alkylendinitrile ein, wobei der Alkylenrest (-CH₂-) vorzugsweise 3 bis 11 C-Atome, weiter bevorzugt 3 bis 9 C-Atome enthält, wie 1,3-Dicyanopropan, l,4-Dicyanobutan (Adipodinitril, ADN), 1,5-Dicyanopentan, 1,6-Dicyanohexan, 1,7-Dicyanoheptan, 1,8-Dicyanooctan, 1,9-Dicyannonan, besonders bevorzugt Adipodinitril.

Adipodinitril kann nach an sich bekannten Verfahren durch doppelte katalytische Anlagerung von HCN an Butadien erhalten werden.

Selbstverständlich können auch Gemische mehrerer Dinitrile oder Gemische eines Dinitrils mit weiteren Comonomeren, wie Dicarbonsäuren, beispielsweise Adipinsäure, eingesetzt werden.

Als Diamine können einzeln oder im Gemisch prinzipiell alle Diamine, d.h. Verbindungen mit mindestens zwei Aminogruppen, eingesetzt werden. Unter diesen sind die alpha,omega-Diamine bevorzugt, wobei unter letzteren insbesondere alpha,omega-Alkylendiamine mit 3 bis 14 C-Atomen, weiter bevorzugt 3 bis 10 C-Atomen im Alkylenrest, oder Alkylaryldiamine mit 9 bis 14 C-Atomen eingesetzt werden, wobei dort solche bevorzugt werden, die zwischen der aromatischen Einheit und den beiden Aminogruppen eine Alkylengruppe mit mindestens einem C-Atom aufweisen. Unter den Alkylaryldiaminen sind insbesondere solche bevorzugt, die die beiden Aminogruppen in 1,4-Stellung zueinander aufweisen.

Als alpha,omega-Alkylendiamine setzt man weiter bevorzugt lineare alpha,omega-Alkylendiamine ein, wobei der Alkylenrest (-CH₂-) vorzugsweise 3 bis 14 C-Atome, weiter bevorzugt 3 bis 10 C-Atome enthält, wie 1,3-Diaminopropan, 1,4-Diaminobutan, 1,5-Diaminopentan, 1,6-Diaminohexan (Hexamethylendiamin, HMD), 1,7-Diaminoheptan, 1,8-Diaminooctan, 1,9-Diaminononan, 1,10-Dicyanodecan, besonders bevorzugt Hexamethylendiamin.

Hexamethylendiamin kann nach an sich bekannten Verfahren durch doppelte katalytische Hydrierung der Nitrilgruppen von Adipodinitril erhalten werden.

Vorteilhaft kann das Diamin in Wasser gelöst eingesetzt werden.

Selbstverständlich können auch Gemische mehrerer Diamine oder Gemische eines Dinitrils mit weiteren Comonomeren, eingesetzt werden.

Das molekulare Verhältnis von Dinitril zu Diamin, wobei bei den nachfolgenden Mengenangaben unter Dinitril die Summe aus Dinitril und gegebenenfalls eingesetzter Dinitril-Äquivalente, also Verbindungen, die unter den erfindungsgemäßen Verfahrensbedingungen wie ein Dinitril reagieren, wie Dicarbonsäuren, verstanden werden, und unter Diamin die Summe aus Diamin und gegebenenfalls eingesetzter Diamin-Äquivalente, also Verbindungen, die unter den erfindungsgemäßen Verfahrensbedingungen wie ein Diamin reagieren, verstanden werden, sollte vorteilhaft zwischen 0,5 bis 2, vorzugsweise 0,8 bis 1,2, insbesondere 1 betragen.

In einer besonderen Ausführungsform, insbesondere wenn man Copolyamide oder verzweigte oder kettenverlängerte Polyamide herstellen möchte, setzt man anstelle von reinem Dinitril und reinem Diamin folgendes Gemisch ein:
50 bis 99,99, bevorzugt 80 bis 90 Gew.-% Dinitril und Diamin in Summe,
0,01 bis 50, bevorzugt von 1 bis 30 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
0 bis unter 50 bevorzugt 0 bis 30 Gew.-% eines Aminonitrils sowie
0 bis 50 bevorzugt 0 bis 30 Gew.-% eines α,ω-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C₁₀-α-ω-Dicarbonsäuren, wie Bernsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsãuren wie Terephthalsäure sowie. C₅-C₈-cycloalkandicarbonsäuren wie Cyclohexandicarbonsäure einsetzen.

Des weiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als Aminonitril können einzeln oder im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen- Unter den Aminoalkylarylnitrilen sind insbesondere solche bevorzugt, die die Amino- und Nitrilgruppe in 1,4-Stellung zueinander aufweisen.

Als (ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836,938, DE-A 848,654 oder US 5 151 543.

Selbstverständlich können auch Gemische mehrerer Aminonitrile oder Gemische eines Aminonitrils mit weiteren Comonomeren eingesetzt werden.

Gewünschtenfalls kann man auch Diamine, Dinitrile und Aminonitrile, die sich von verzweigten Alkylen- oder Arylen- oder Alkylarylenen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Das erfindungsgemäße Verfahren führt man bei Temperaturen von 90 bis 400°C, vorteilhaft 150 bis 350°C, durch bei Drücken von 0,1 bis 50*10⁶ Pa.

Als heterogene Katalysatoren können Oxide ausgewählt aus der Gruppe bestehend aus Aluminiumoxid, Zinnoxid, Siliciumoxid als pyrogen hergestelltes Siliciumoxid, als Kieselgel, Kieselgur, Quarz, Schichtsilikat oder Mischungen derselben, weiterhin Oxide der Metalle der zweiten bis sechsten Nebengruppe des Periodensystems, wie Titandioxid, amorph, als Anatas oder Rutil, Zirkonoxid. Zinkoxid, Oxide der Lanthaniden und Aktiniden, wie Ceroxid, Thoriumoxid, Praseodymoxid, Samariumoxid, Seltenerd-Mischoxide oder Mischungen der zuvor genannten Oxide eingesetzt werden.

Weitere Katalysatoren können beispielsweise sein: Vanadiniumoxid, Nioboxid, Eisenoxid, Chromoxid, Molybdänoxid, Wolframoxid oder Mischungen davon. Mischungen der genannten Oxide untereinander sind ebenfalls möglich. Auch einige Sulfide, Selenide und Telluride wie Zink-Tellurid, Zinn-Selenid, Molybdänsulfid, Wolframsulfid, Sulfide des Nickels, Zinks und Chroms sind einsetzbar.

Die vorstehend genannten verbindungen können mit Verbindungen der 1. und 7. Hauptgruppe des Periodensystems dotiert sein bzw. diese enthalten.

Weiterhin sind Zeolithe, wie Beta-Zeolithe, Phosphate und Heteropolysäuren, sowie saure und alkalische Ionenaustauscher wie beispielsweise Naphion® als geeignete Katalysatoren zu nennen.

Gegebenenfalls können diese Katalysatoren bis zu jeweils 50 Gew.-% an Kupfer, Zinn, Zink, Mangan, Eisen, Kobalt, Nickel, Ruthenium, Palladium, Platin, Silber oder Rhodium enthalten.

Bevorzugt sind Katalysatoren ausgewählt aus der Gruppe bestehend aus Beta-Zeolith, Schichtsilikat und insbesondere Titandioxid, wobei das Titandioxid vorteilhaft aus 70 bis 100 Gew.-% Anatas und 0 bis 30 Gew.-% Rutil, in dem bis 40 Gew.-% des Titandioxids durch Wolframoxid ersetzt sein können, oder deren Gemische. Solche Katalysatoren sind besonders bevorzugt, wenn sie als Brönstedt-Säure fungieren können.

Die Katalysatoren können je nach der Zusammensetzung des Katalysators als Vollkontakt oder Trägerkatalysator verwendet werden. So kann z.B. Titandioxid als Titandioxid-Strang oder als auf einen Träger in dünner Schicht aufgebrachtes Titandioxid eingesetzt werden. Zum Aufbringen von Titandioxid auf einen Träger wie Siliciumdioxid, Aluminiumoxid oder Zirkondioxid sind alle in der Literatur beschriebenen Methoden verwendbar. So kann eine dünne Titandioxid-Schicht durch Hydrolyse von Ti-Organylen wie Ti-Isopropylat oder Ti-Butylat, oder durch Hydrolyse von TiCl₄ oder anderen anorganischen Ti-haltigen Verbindungen aufgebracht werden. Auch Titandioxid-haltige Sole sind verwendbar.

Weitere geeignete Verbindungen sind Zirkonylchlorid, Aluminiumnitrat und Cernitrat.

Geeignete Träger sind Pulver, Stränge oder Tabletten der genannten Oxide selbst oder anderer stabiler Oxide wie Siliciumdioxid. Die verwendeten Träger können zur Verbesserung des Stofftransports makroporös ausgestaltet sein.

Das erfindungsgemäße Verfahren kann kontinuierlich oder diskonti-nuierlich durchgeführt werden.

Erfindungsgemäß setzt man Wasser in einem Molverhältnis von der Summe aus Dinitril und Diamin zu Wasser von mindestens 1:1, vorteilhaft im Bereich von 1:1 bis 1:10, besonders bevorzugt von 1:2 bis 1:8, ganz besonders bevorzugt von 1:2 bis 1:6, ein, wobei der Einsatz von Wasser im Überschuß, bezogen auf die Summe aus Dinitril und Diamin bevorzugt ist.

Vorteilhaft wird in einer ersten Stufe (Stufe 1) mindestens ein Dinitril und mindestens ein Diamin mit Wasser, bei einer Temperatur von 90 bis 400°C, vorzugsweise 180 bis 310°C und insbesondere bei 220 bis 270°C erhitzt, wobei ein Druck von 0,1 bis 15 x 10⁶ Pa, vorzugsweise 1 bis 10 x 10⁶ Pa und insbesondere 4 bis 9 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden.

Bei dieser Ausführungsform entspricht die flüssige oder feste Phase oder das Gemisch aus flüssiger und fester Phase dem Umsetzungsgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder -flüssig vorliegt.

Die Abtrennung der Gasphase kann durch den Einsatz von gerührten oder nicht-gerührten Abscheidekesseln oder Kesselkaskaden sowie durch den Einsatz von Verdampferapparaten erfolgen, z.B. durch Umlaufverdampfer oder Dünnschichtverdampfer, wie z.B. durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzf läche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampf druck der übrigen Komponenten im Reaktionsgemisch bei der vorgegebenen Temperatur. Auf diese weise kann insbesondere die Abscheidung von Ammoniak begünstigt und somit die Hydrolyse der Säureamidgruppen beschleunigt werden.

Bevorzugt wird bei der zweiphasigen Fahrweise ein Druck gewählt, der größer ist als der zur Massetemperatur der Reaktionsmischung gehörenden Dampfdruck von reinem Wasser, jedoch kleiner als der Gleichgewichtsdampfdruck von Ammoniak.

In einer besonders bevorzugten Ausführungsform der zweiphasigen Fahrweise wird ein senkrecht stehendes Strömungsrohr eingesetzt, das von unten nach oben durchströmt wird und gewünschtenfalls oberhalb des Produktausgangs eine weitere Öffnung zur Gasphasenabtrennung aufweist. Dieser Rohrreaktor kann vollständig oder teilweise mit Katalysatorgranulat gefüllt sein. In einer bevorzugten Ausführungsform ist der senkrecht stehende Reaktor bei zweiphasiger Fahrweise maximal bis zur Phasengrenze mit Katalysatormaterial gefüllt.

In einer anderen, besonders bevorzugten Ausführungsform der ersten Stufe wird der Druck so gewählt, daß das Reaktionsgemisch einphasig flüssig vorliegt, d.h. im Reaktor keine Gasphase vorhanden ist. Bei dieser einphasigen Fahrweise ist die bevorzugte Ausführungsform ein Strömungsrohr, gefüllt ausschließlich mit Katalysatormaterial.

Vorteilhaft kann das Dinitril/Diamin/Wasser-Gemisch vor der Einführung in die erste Stufe mit Hilfe eines Wärmetauschers erhitzt werden. Selbstverständlich können Dinitril, Diamin und das Wasser auch getrennt voneinander erhitzt und in der ersten Stufe durch den Einsatz von Mischelementen vermischt werden.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 30 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als 70 mol-%, vorzugsweise mindestens 95 mol-% und insbesondere 97 bis 99 mol-%, jeweils bezogen auf die Molzahl an eingesetztem Dinitril und Diamin.

Den Umsatz an Nitrilgruppen ermittelt man üblicherweise mittels IR-Spektroskopie (CN-Valenz-Schwingung bei 2247 Wellenzahlen), NMR oder HPLC, bevorzugt durch IR-Spektroskopie.

Weiterhin ist es errindungsgemäß nicht ausgeschlossen, die Umsetzung in Stufe 1 auch in Gegenwart von sauerstoffhaltigen Phosphorverbindungen, insbesondere Phosphorsäure, phosphorige Säure und hypophosphorige Säure sowie deren Alkalimetall- und Erdalkalimetallsalze und Ammoniumsalze wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von der Summe aus Dinitril und Diamin zu Phosphorverbindungen im Bereich von 0,01:1 bis 1:1, bevorzugt von 0,01:1 bis 0,1:1 wählt.

Die Umsetzung wird in Stufe 1 in einem Strömungsrohr durchgeführt, das einen Brönsted-Säurekatalysator, ausgewählt aus einem Beta-Zeolith-, Schichtsilikat- oder einem Titandioxid-Katalysator aus 70 bis 100 Gew.-% Anatas und 0 - 30 Gew.-% Rutil, in dem bis zu 40 Gew.-% des Titandioxids durch Wolframoxid ersetzt sein können, enthält. Wird sehr reines Dinitril und sehr reines Diamin eingesetzt, so sollte der Anteil an Anatas im Titandioxid-Katalysator möglichst hoch sein. Vorzugsweise wird ein reiner Anatas-Katalysator eingesetzt. Enthält das eingesetzte Dinitril oder das eingesetzte Diamin Verunreinigungen, beispielsweise 1 bis 3 Gew.-% an Verunreinigungen, so wird vorzugsweise ein Titandioxid-Katalysator eingesetzt, der ein Gemisch aus Anatas und Rutil enthält. Vorzugsweise beträgt der Anteil an Anatas 70 bis 80 Gew.-% und der Anteil an Rutil 20 bis 30 Gew.-%. Besonders bevorzugt wird in diesem Fall ein Titandioxid-Katalysator aus etwa 70 Gew.-% Anatas und etwa 30 Gew.-% Rutil eingesetzt. Der Katalysator weist vorzugsweise ein Porenvolumen von 0,1 bis 5 ml/g besonders bevorzugt 0,2 bis 0,5 ml/g auf. Der mittlere Porendurchmesser beträgt vorzugsweise 0,005 bis 0,1 µm, besonders bevorzugt 0,01 bis 0,06 µm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatoraktivität zu gewährleisten. Besonders bevorzugte Katalysatoren weisen folgende Eigenschaften auf: 100 % Anatas; 0,3 ml/g Porenvolumen; 0,02 µm mittlerer Porendurchmesser; 32 N Schneidhärte; 116 m2/g BET-Oberfläche oder 84 Gew.-% Anatas; 16 Gew.-% Rutil; 0,3 ml/g Porenvolumen; 0,03 µm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeous catalysis", VCH Weinheim, 1997, Seiten 98ff beschrieben erfolgen. Der Katalysator kann in jeder beliebigen geeigneten Form eingesetzt werden. Vorzugsweise wird er in Form von Formkörpern, Strängen oder Granulat, insbesondere von Granulat eingesetzt. Das Granulat ist dabei vorzugsweise so groß, daß es vom Produktgemisch gut abtrennbar ist und bei der Umsetzung die Fließfähigkeit des Produkts nicht beeinträchtigt.

Durch die Granulatform des Katalysators ist es möglich, ihn am Austrag der ersten Stufe mechanisch abzutrennen. Beispielsweise werden dazu mechanische Filter oder Siebe am Austrag der ersten Stufe vorgesehen. Wird der Katalysator zudem in der zweiten und/oder dritten Stufe ebenfalls verwendet, so liegt er vorzugsweise in der gleichen Form vor.

Erfindungsgemäß wird das in der ersten Stufe erhaltene Umsetzungsgemisch in Stufe 2 bei einer Temperatur von 200 (150) bis 350 (400)°C, vorzugsweise einer Temperatur im Bereich von 210 (200) bis 330 (330)°C und insbesondere im Bereich von 230 (230) bis 270 (290)°C und einem Druck, der niedriger ist als der Druck in Stufe 1 weiter umgesetzt. Vorzugsweise ist der Druck in der zweiten Stufe mindestens 0,5 x 10⁶ Pa niedriger als der Druck in Stufe 1, wobei im allgemeinen der Druck im Bereich von 0,1 bis ungefähr 45 x 10⁶ Pa, vorzugsweise 0,5 bis 15 x 10⁶ Pa und insbesondere 2 bis 6 x 10⁶ Pa liegt (Werte in Klammern: ohne Katalysator).

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation ggf. mitabgeschiedenen organischen Bestandteile des Destillats, im überwiegendem Maße nicht umgesetztes Dinitril und Diamin, können in Stufe 1 und/oder Stufe 2 vollständig oder teilweise zurückgeführt werden.

Die Verweilzeit des Umsetzungsgemisch in Stufe 2 unterliegt keinerlei Beschränkungen, beträgt jedoch im allgemeinen 10 Minuten bis 5 Stunden, vorzugsweise 30 Minuten bis 3 Stunden.

Die Produktleitung zwischen der ersten und zweiten Stufe enthält ggf. Füllkörper, wie Raschig-Ringe oder Sulzer-Mischelemente, die eine kontrollierte Entspannung des Umsetzungsgemischs in die Gasphase ermöglichen. Dies trifft insbesondere auf die einphasige Betriebsweise zu.

Vorzugsweise enthält auch der Reaktor der zweiten Stufe das erfindungsgemäße Katalysatormaterial, insbesondere in Granulatform. Es wurde gefunden, daß der Reaktor im Vergleich zu einem katalysatorfreien Reaktor insbesondere bei höheren Drücken und/oder bei einem großen Wasserüberschuß in der Reaktionsmischung eine weitere Verbesserung der Produkteigenschaf ten ermöglicht. Temperatur und Druck sollten so gewählt sein, daß die Viskosität der Reaktionsmischung klein genug bleibt, um eine Verstopfung der Katalysatoroberfläche zu vermeiden. Erfindungsgemäß werden auch am Austrag der zweiten Verfahrensstufe Siebe oder Filter eingesetzt, die die Reinheit der Reaktionsmischung garantieren und den Katalysator von der Reaktionsmischung trennen.

In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf, versetzt. Dies geschieht kontinuierlich. Die Menge an zugegebenem Wasser (als Flüssigkeit) liegt vorzugsweise im Bereich von 50 bis 1500 ml, weiter bevorzugt 100 bis 500 ml, jeweils bezogen auf 1 kg der ersten flüssigen oder ersten festen Phase oder des Gemischs aus erster flüssiger und erster fester Phase. Durch diesen Wasserzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserüberschuß eingesetzt werden kann.

Vorzugsweise wird die Wasser enthaltende gasförmige oder flüssige Phase vor der Einleitung in Stufe 3 in einem Wärmetauscher vorgeheizt und anschließend mit der ersten flüssigen oder der ersten festen Phase oder dem Gemisch aus erster fester und erster flüssiger Phase vermischt. Dabei können ggf. Mischelemente im Reaktor eingesetzt werden, die die Durchmischung der Komponenten fördern. Stufe 3 kann bei einer Temperatur von 150 bis 37°C und einem Druck von 0,1 bis 30 x 10⁶ Pa betrieben werden, beim Vorliegen einer erfindungsgemäßen Katalysatorschüttung können die für Stufe 1 geltenden Bedingungen angewendet werden. Die Temperatur beträgt sonst vorzugsweise 180 bis 300°C, besonders bevorzugt 220 bis 280°C. Der Druck beträgt vorzugsweise 1 bis 10 x 10⁶ Pa, besonders bevorzugt 2 x 10⁶ bis 7 x 10⁶ Pa.

Dabei können Druck und Temperatur so aufeinander abgestimmt werden, daß das Reaktionsgemisch einphasig-flüsssig oder einphasig-fest vorliegt. In einer anderen Ausführurigsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssig-gasförmig, fest-gasförmig oder flüssig/festgasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren können mit denen der Stufe 1, wie oben diskutiert, identisch sein.

Die Verweilzeit in dieser Stufe unterliegt ebenfalls keinen Beschränkungen, aus wirtschaftlichen Gründen wählt man sie jedoch im allgemeinen im Bereich zwischen 10 Minuten bis 10 Stunden, vorzugsweise zwischen 60 bis 8 Stunden, besonders bevorzugt 60 Minuten bis 6 Stunden.

3 Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von 200 bis 350°C, vorzugsweise einer Temperatur von 220 bis 300°C und insbesondere 240 bis 270°C unterworfen. Stufe 4 wird bei einem Druck durchgeführt, der unterhalb des Drucks der Stufe 3 liegt, und vorzugsweise in einem Bereich von 5 bis 1000 x 10³ Pa, weiter bevorzugt 10 bis 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von 1,6 bis 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

Auch die vierte Stufe kann mit dem erfindungsgemäßen Katalysator betrieben werden. Es wurde gefunden, daß der Einsatz des Katalysators in der Verfahrensstufe 4 insbesondere dann den Molekulargewichtsaufbau verbessert, wenn die relative Viskosität des Austrags aus der dritten oder - im Falle der dreistufigen Fahrweise - zweiten Stufe kleiner ist als RV = 1,6 - und/oder der molare Nitrilgruppen- und Säureamidgehalt im Polymer größer als 1 % ist, jeweils bezogen auf die Summe der Molzahlen an eingesetztem Dinitril und Diamin.

In einer weiteren Ausführungsform kann erfindungsgemäß auf Stufe 3 verzichtet werden und zur Herstellung des Polyamids die Stufen (1), (2) und (4) ausgeführt werden.

Vorzugsweise wird diese Variante wie folgt durchgeführt:

In Stufe 1 wird wie vorstehend beschrieben umgesetzt. Das Umₛetzungsgemisch wird in Stufe 2 wie vorstehend beschrieben oder bei einer Temperatur im Bereich von 220 bis 300°C und einem Druck im Bereich von 1 bis 7 x 10⁶ Pa behandelt, wobei der Druck in der zweiten Stufe mindestens 0,5 x 10⁶ Pa niedriger ist als in Stufe 1. Gleichzeitig wird die entstandene erste Gasphase von der ersten flüssigen Phase abgetrennt.

Die in Stufe 2 erhaltene erste flüssige Phase wird in Stufe 4 wie in Stufe 1 oder bei einer Temperatur im Bereich von 220 bis 300°C und einem Druck im Bereich von 10 bis 300 x 10³ Pa behandelt, wobei die dabei entstehende zweite, Wasser und Ammoniak enthaltende Gasphase von der zweiten flüssigen Phase abgetrennt wird. Innerhalb dieser Stufe wird die relative Viskosität (gemessen wie oben definiert) des erhaltenen Polyamids auf einen gewünschten Wert im Bereich von 1,6 bis 3,5 durch Wahl der Temperatur und der Verweilzeit eingestellt.

Aₙschließend wird die so erhaltene zweite flüssige Phase nach üblichen Methoden ausgetragen und, falls dies erwünscht ist, aufgearbeitet.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

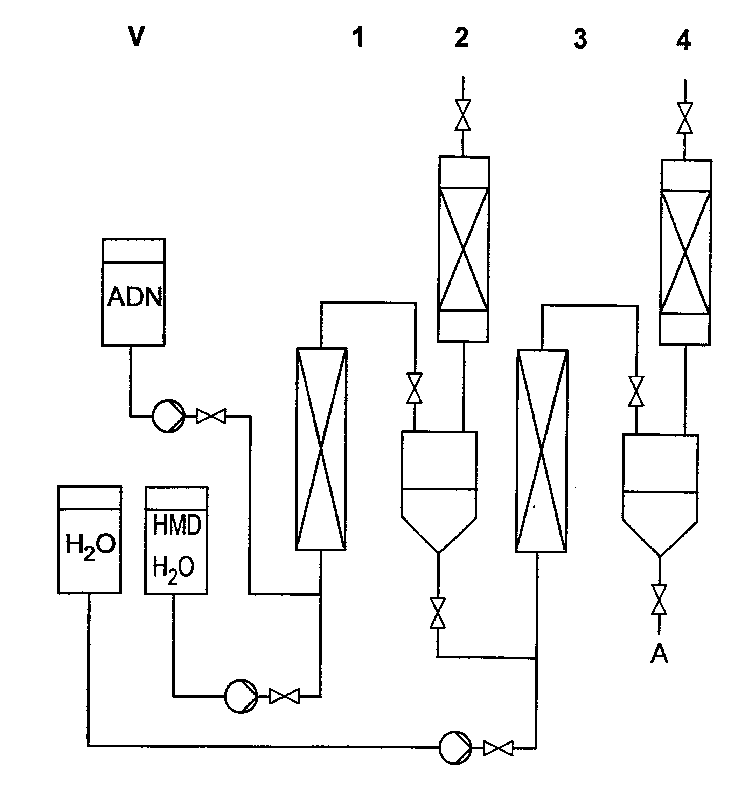

In der Zeichnung ist in Fig 1. eine Vorrichtung zur Durchführung des erfindungsgemäßen Verfahrens dargestellt.

Dabei bedeuten:
- V: : Vorlage
- ADN: : Adipodinitril
- HMD: : Hexamethylendiamin
- 1: : Stufe 1
- 2: : Stufe 2
- 3: : Stufe 3
- 4: : Stufe 4
- A: : Austrag.

Ferner kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

Als einsetzbare Substanzen sind zu nennen:

Trifunktionelle Amine oder Carbonsäuren als Verzweiger bzw. Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.

Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

(R₂N-(CH₂)ₙ)₂N-(CH₂)ₓ-N((CH₂)ₙ-NR₂)₂ (I)

in der
R H oder -(CH₂)ₙ-NR¹₂ mit
R¹ H oder -(CH₂)ₙ-NR²₂ mit
R² H oder -(CH₂)-NR³₂ mit
R³ H oder -(CH₂)ₙ-NH₂ ist,
n einen ganzzahligen wert von 2 bis 6 hat und
x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest - (CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3, 5,3', 5'-Biphenyltetracarbonsäure-Phthalocyanin, Naphthalocyanin, 3, 5, 5', 5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,214,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden' Aminen oder Carbonsäuren. Geringe Mengen an mindestens trifunktionellen Aminen können jedoch den trifunktionellen Carbonsäuren enthalten sein und umgekehrt.

Die Substanzen liegen in der Menge von 1 bis 50 µmol/g Polyamid, vorzugsweise 1 bis 35, besonders bevorzugt 1 bis 20 µmol/g Polyamid vor. Vorzugsweise sind die Substanzen in einer Menge von 3 bis 150, besonders bevorzugt 5 bis 100, insbesondere 10 bis 70 µmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine (c) werden vorzugsweise in Mengen von 1 bis 55, besonders bevorzugt 1 bis 30, insbesondere 1 bis 15 µm/g Polyamid eingesetzt.

Vorteilhaft trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, 2.3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschreiben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepfropft werden.

Die unter den Polymeren A beschriebenen Copolymere von α-Olefinen, darunter insbesondere die Ethylencopolymere können anstelle als Polymere A auch als Kautschuke eingesetzt und den erfindungsgemäßen Zusammensetzungen als solche beigemischt werden.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei-sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetrasiloxan hergestellt werden. Diese können beispielsweise mit γ-Mercaptopropylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen. sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G. Benzing, Pigmente für Anstrichmittel, Expert-verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

## Patentansprüche

1. Verfahren zur Herstellung eines Polyamids durch Umsetzung mindestens eines Dinitrils und mindestens eines Diamins mit Wasser bei einer Temperatur von 90 bis 400°C, einem Druck von 0,1 bis 50*10⁶ Pa und einem Molverhältnis von Wasser zu der Summe aus Dinitril und Diamin von mindestens 1:1 in Gegenwart eines heterogenen Katalysators, ausgewählt aus der Gruppe bestehend aus Aluminiumoxid, Zinnoxid, Siliciumoxid, Oxide der zweiten bis sechsten Nebengruppe des Periodensystems, Oxide der Lanthaniden und Aktiniden, Schichtsilikate, Zeolithe.

2. Verfahren nach Anspruch 1, wobei man einen Katalysator ausgewählt aus der Gruppe bestehend aus Beta-Zeolith, Schichtsilikat und Titandioxid einsetzt.

3. Verfahren nach Anspruch 1 oder 2, wobei man als Katalysator Titandioxid, wobei das Titandioxid vorteilhaft aus 70 bis 100 Gew.-% Anatas und 0 bis 30 Gew.-% Rutil, in dem bis 40 Gew.-% des Titandioxids durch Wolframoxid ersetzt sein können, einsetzt.

4. Verfahren nach den Ansprüchen 1 bis 3, wobei in dem Titanoxid bis zu 40 Gew.-% des Titanoxids durch Wolframoxid ersetzt ist.

5. Verfahren nach den Ansprüchen 1 bis 4, wobei man das Verfahren kontinuierlich durchführt.

6. Verfahren nach Anspruch 1 bis 4, wobei man das Verfahren diskontinuierlich durchführt.

7. Kontinuierliches Verfahren zur Herstellung eines Polyamids durch Umsetzung mindestens eines Dinitrils und mindestens eines Diamins mit Wasser, das die folgenden Stufen umfaßt:
(1) Umsetzung mindestens eines Dinitrils und mindestens eines Diamins mit Wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein ümsetzungsgemisch erhalten wird,
(2) weitere Umsetzung des Umsetzungsgemischs bei einer Temperatur von 150 bis 400°C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa, wobei ein Produktgemisch erhalten wird.

8. Kontinuierliches Verfahren zur Herstellung eines Polyamids durch Umsetzung mindestens eines Dinitrils und mindestens eines Diamins mit Wasser, das die folgenden Stufen umfaßt:
( Umsetzung mindestens eines Dinitrils und mindestens eines Diamins mit wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370°C und einem Druck von 0,1 bis 30 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Produktgemisch erhalten wird.

9. Verfahren nach Anspruch 7 oder 8, das zusätzlich folgende Stufe umfaßt:
(4) Nachkondensation des Produktgemischs bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

10. Kontinuierliches Verfahren zur Herstellung eines Polyamids durch Umsetzung mindestens eines Dinitrils und mindestens eines Diamins mit Wasser, das die folgenden Stufen umfaßt:
(1) Umsetzung mindestens eines Dinitrils und mindestens eines Diamins mit Wasser bei einer Temperatur von 90 bis 400°C und einem Druck von 0,1 bis 35 x 10⁶ Pa in einem Strömungsrohr, das einen Brönsted-Säurekatalysator, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, enthält, wobei ein Umsetzungsgemisch erhalten wird,
(2) weitere Umsetzung des Umsetzungsgemischs bei einer Temperatur von 150 bis 400°C und einem Druck, der niedriger ist, als der Druck in Stufe 1, die in Gegenwart eines Brönsted-Säurekatalysators, ausgewählt aus einem Beta-Zeolith-, Schichtsilikat- oder einem Titandioxid-Katalysators aus 70 bis 100 Gew.-% Anatas und 0 bis 30 Gew.-% Rutil, in dem bis zu 40 Gew.-% des Titandioxids durch Wolframoxid ersetzt sein können, durchgeführt werden kann, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(4) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils das Polyamid enthält, erhalten werden.

11. Verfahren nach einem der Ansprüche 7 bis 10, wobei in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

12. Verfahren nach einem der Ansprüche 7 bis 11, wobei die Umsetzung gemäß Stufe 1 mit einem Molverhältnis von in Summe Dinitril und Diamin zu Wasser von 1:1 bis 1:30 erfolgt.

13. Verfahren nach einem der Ansprüche 7 bis 12, wobei in Stufe 3 die gasförmige oder flüssige Phase, die Wasser enthält, in einer Menge von 50 bis 1500 ml Wasser pro 1 kg erste flüssige oder erste feste Phase oder Gemisch aus erster flüssiger und erster fester Phase zugesetzt wird.

14. Verfahren nach einem der Ansprüche 7 bis 13, wobei mindestens eine der in den jeweiligen Stufen erhaltenen Gasphasen in mindestens eine der vorhergehenden Stufen zurückgeführt wird.

15. Verfahren nach einem der Ansprüche 1 bis 14, wobei als Dinitril ein alpha, omega-Alkylendinitril mit einem Alkylenrest (-CH₂-) von 3 bis 11 C-Atomen oder ein Alkylaryldinitril mit 7 bis 12 C-Atomen umgesetzt wird.

16. Verfahren nach einem der Ansprüche 1 bis 15, wobei man als Dinitril Adipodinitril einsetzt.

17. Verfahren nach einem der Ansprüche 1 bis 16, wobei als Diamin ein alpha,omega-Alkylendiamin mit einem Alkylenrest (-CH₂-) von 3 bis 14 C-Atomen oder ein Alkylaryldiamin mit 9 bis 14 C-Atomen eingesetzt wird.

18. Verfahren nach einem der Ansprüche 1 bis 17, wobei man als Diamin Hexamethylendiamin einsetzt.

19. Verfahren nach einem der Ansprüche 1 bis 18, wobei folgendes Gemisch eingesetzt wird:
| | | |
|---|---|---|
| von 50 | bis 99,99 Gew.-% | Dinitril und Diamin in Summe, |
| von 0,01 | bis 50 Gew.-% | mindestens einer Dicarbon säure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbon säuren, |
| von 0 | bis unter 50 Gew.-% | eines Aminonitrils sowie |
| von 0 | bis 50 Gew.-% | einer α,ω-C₅-C₁₂-Aminosäure oder des entsprechenden Lactams, |
| von 0 | bis 10 Gew.-% | mindestens einer anorganischen Säure oder deren Salz, |
wobei die Summe der einzelnen Gew.-%-Angaben 100 % beträgt.

20. Verfahren nach einem der Ansprüche 1 bis 19, wobei man das Diamin in Wasser gelöst einsetzt.

## Claims

1. The process for preparing a polyamide by reacting at least one dinitrile and at least one diamine with water at a temperature from 90 to 400°C and a pressure from 0.1 to 50*106 Pa in a molar ratio of at least 1:1 for water to the sum total of dinitrile and diamine in the presence of a heterogeneous catalyst selected from the group consisting of aluminum oxide, tin oxide, silicon oxide, oxides of the second to sixth transition group of the periodic table, oxides of the lanthanides and actinides, sheet-silicates and zeolites.

2. The process of claim 1, wherein the catalyst used is selected from the group consisting of beta-zeolite, sheet-silicate and titanium dioxide.

3. The process of claim 1 or 2, wherein the catalyst used is a titanium dioxide advantageously comprising from 70 to 100% by weight of anatase and from 0 to 30% by weight of rutile, in which catalyst up to 40% by weight of titanium dioxide may be replaced by tungsten oxide.

4. The process of any of claims 1 to 3, wherein up to 40% by weight of the titanium oxide in the titanium oxide is replaced by tungsten oxide.

5. A continuous process as claimed in any of claims 1 to 4.

6. A batch process as claimed in any of claims 1 to 4.

7. A continuous process for preparing a polyamide by reacting at least one dinitrile and at least one diamine with water, which comprises:
(1) reacting at least one dinitrile and at least one diamine with water at a temperature from 90 to 400°C and a pressure from 0.1 to 35 x 10⁶ Pa in a flow tube containing a Bronsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide to obtain a reaction mixture,
(2) further reacting the reaction mixture at a temperature from 150 to 400°C and a pressure which is lower than the pressure in stage 1, which may be carried out in the presence of a Brönsted acid catalyst selected from a beta-zeolite catalyst, a sheet-silicate catalyst or titanium dioxide catalyst comprising from 70 to 100% by weight of anatase and from 0 to 30% by weight of rutile and in which up to 40% by weight of the titanium dioxide may be replaced by tungsten oxide, in which case the temperature and pressure are selected so as to obtain a first gas phase and a first liquid or a first solid phase or a mixture of first solid and first liquid phases, and so that the first gas phase is separated from the first liquid or the first solid phase or from the mixture of first liquid and first solid phases, and
(3) admixing the first liquid or the first solid phase or the mixture of first liquid and first solid phases with a gaseous or liquid phase comprising water at a temperature from 150 to 370°C and a pressure from 0.1 to 30 x 10⁶ Pa to obtain a product mixture.

8. A continuous process for preparing a polyamide by reacting at least one dinitrile and at least one diamine with water, which comprises:
(1) reacting at least one dinitrile and at least one diamine with water at a temperature from 90 to 400°C and a pressure from 0.1 to 35 x 10⁶ Pa in a flow tube containing a Bronsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide to obtain a reaction mixture,
(2) further reacting the reaction mixture at a temperature from 150 to 400°C and a pressure which is lower than the pressure in stage 1, which may be carried out in the presence of a Bronsted acid catalyst selected from a beta-zeolite catalyst, a sheet-silicate catalyst or titanium dioxide catalyst comprising from 70 to 100% by weight of anatase and from 0 to 30% by weight of rutile and in which up to 40% by weight of the titanium dioxide may be replaced by tungsten oxide,in which case the temperature and pressure selected so as to obtain a first gas phase and a first liquid or a first solid phase or a mixture of first solid and first liquid phases, and so that the first gas phase is separated from the first liquid or the first solid phase or from the mixture of first liquid and first solid phases, and
(3) admixing the first liquid or the first solid phase or the mixture of first liquid and first solid phases with a gaseous or liquid phase comprising water at a temperature from 150 to 370°C and a pressure from 0.1 to 30 x 10⁶ Pa in a flow tube containing a Bronsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide to obtain a product mixture.

9. A process as claimed in claim 7 or 8, further comprising the following stage:
(4) postcondensing the product mixture at a temperature from 200 to 350°C and a pressure which is lower than the pressure in stage 3, the temperature and pressure being selected so as to obtain a second, water- and ammonia-containing gas phase and a second liquid or second solid phase or a mixture of second liquid and second solid phases, which each include the polyamide.

10. A continuous process for preparing a polyamide by reacting at least one dinitrile and at least one diamine with water, which comprises:
(1) reacting at least one dinitrile and at least one diamine with water at a temperature from 90 to 400°C and a pressure from 0.1 to 35 x 10⁶ Pa in a flow tube containing a Bronsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide to obtain a reaction mixture,
(2) further reacting the reaction mixture at a temperature from 150 to 400°C and a pressure which is lower than the pressure in stage 1, which may be carried out in the presence of a Bronsted acid catalyst selected from a beta-zeolite catalyst, a sheet-silicate catalyst or titanium dioxide catalyst comprising from 70 to 100% by weight of anatase and from 0 to 30% by weight of rutile and in which up to 40% by weight of the titanium dioxide may be replaced by tungsten oxide, in which case the temperature and pressure selected so as to obtain a first gas phase and a first liquid or a first solid phase or a mixture of first solid and first liquid phases, and so that the first gas phase is separated from the first liquid or the first solid phase or from the mixture of first liquid and first solid phases, and
(4) postcondensing the first liquid or the first solid phase phase or the mixture of first liquid and first solid phases at a temperature from 200 to 350°C and a pressure which is lower than the pressure in stage 3, the temperature and pressure being selected so as to obtain a second, water- and ammonia-containing gas phase and a second liquid or second solid phase or a mixture of second liquid and second solid phases, which each include the polyamide.

11. A process as claimed in any of claims 7 to 10, wherein the temperature and pressure in stage 1 or in stage 3 or in both stage 1 and stage 3 are selected so as to obtain a liquid or a solid phase or a mixture of liquid and solid phases and a gaseous phase, and the gaseous phase is separated off.

12. A process as claimed in any of claims 7 to 11, wherein the reaction of stage 1 is carried out using a molar ratio from 1:1 to 1:30 for the sum total of dinitrile and diamine to water.

13. A process as claimed in any of claims 7 to 12, wherein in stage 3 the gaseous or liquid phase which contains water is added in an amount from 50 to 1500 ml of water per 1 kg of first liquid or first solid phase or mixture of first liquid and first solid phases.

14. A process as claimed in any of claims 7 to 13, wherein at least one of the gas phases obtained in the respective stages is recycled into at least one of the preceding stages.

15. A process as claimed in any of claims 1 to 14, wherein the dinitrile used is an alpha,omega-alkylenedinitrile having an alkylene moiety (-CH₂-) of from 3 to 11 carbon atoms or an alkylaryl dinitrile of from 7 to 12 carbon atoms.

16. A process as claimed in any of claims 1 to 15, wherein the dinitrile used is adiponitrile.

17. A process as claimed in any of claims 1 to 16, wherein the diamine used is an alpha,omega-alkylenediamine having an alkylene moiety (-CH₂-) of from 3 to 14 carbon atoms or an alkylaryldiamine of from 9 to 14 carbon atoms.

18. A process as claimed in any of claims 1 to 17, wherein the diamine used is hexamethylenediamine.

19. A process as claimed in any of claims 1 to 18, wherein the following mixture is used:
| | | |
|---|---|---|
| from 50 | to 99.99% by weight | of total dinitrile and diamine, |
| from 0.01 | to 50% by weight | of at least one dicarboxylic acid selected from the group consisting of aliphatic C₄-C₁₀ α,ω-dicarboxylic acids, aromatic C₈-C₁₂ dicarboxylic acids and C₅-C₈ cycloalkanedicarboxylic acids, |
| from 0 | to less than 50% by weight | of an aminonitrile and also from 0 to 50% by weight of an α,ω-C₅-C₁₂-amino acid or of the corresponding lactam, |
| from 0 | to 10% by weight | of at least one inorganic acid or salt thereof, |
the individual weight percentages adding up to 100%.

20. A process as claimed in any of claims 1 to 19, wherein the diamine is used in the form of a solution in water.

## Revendications

1. Procédé de préparation d'un polyamide par réaction d'au moins un dinitrile et d'au moins une diamine avec de l'eau, à une température de 90 à 400°C, une pression de 0,1 à 50*10⁶ Pa et une proportion molaire de l'eau à la somme du dinitrile et de la diamine d'au moins 1 : 1, en présence d'un catalyseur hétérogène, choisi dans le groupe formé par l'oxyde d'aluminium, l'oxyde d'étain, l'oxyde de silicium, des oxydes des deuxième à sixième sous-groupes du système périodique, des oxydes des lanthanides et des actinides, des silicates lamellaires, des zéolithes.

2. Procédé selon la revendication 1, dans lequel on met en oeuvre un catalyseur choisi dans le groupe formé par de la β-zéolithe, du silicate lamellaire et du dioxyde de titane.

3. Procédé selon la revendication 1 ou 2, dans lequel on met en oeuvre en tant que catalyseur du dioxyde de titane, où le dioxyde de titane est avantageusement constitué de 70 à 100% en poids d'anatase et de 0 à 30% en poids de rutile, dans lequel jusqu'à 40% en poids du dioxyde de titane peuvent être remplacés par de l'oxyde de tungstène.

4. Procédé selon les revendications 1 à 3, dans lequel, dans l'oxyde de titane, jusqu'à 40% en poids de l'oxyde de titane sont remplacés par de l'oxyde de tungstène.

5. Procédé selon les revendications 1 à 4, dans lequel le procédé est entrepris en mode continu.

6. Procédé selon les revendications 1 à 4, dans lequel le procédé est entrepris en mode discontinu.

7. Procédé continu pour la préparation d'un polyamide par réaction d'au moins un dinitrile et d'au moins une diamine avec de l'eau, comprenant les étapes suivantes:
(1) Réaction d'au moins un dinitrile et d'au moins une amine avec de l'eau, à une température de 90 à 400°C et une pression de 0,1 à 35 x 10⁶ Pa, dans un tube à écoulement, contenant un catalyseur acide de Brönsted, choisi parmi un catalyseur de β-zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, avec obtention d'un mélange réactionnel,
(2) Poursuite de la réaction du mélange réactionnel à une température de 150 à 400°C et une pression inférieure à la pression dans l'étape 1, pouvant être entreprise en présence d'un catalyseur acide de Brönsted, choisi parmi un catalyseur de β -zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de manière que l'on obtienne une première phase gazeuse et une première phase liquide où une première phase solide ou un mélange de première phase solide et de première phase liquide, et la première phase gazeuse est séparée de la première phase liquide ou de la première phase solide ou du mélange de première phase liquide et de première phase solide, et
(3) Mélange de la première phase liquide ou de la première phase solide ou du mélange de première phase liquide et de première phase solide avec une phase gazeuse ou liquide, qui contient de l'eau, à une température de 150 à 370°C et une pression de 0,1 à 30 x 10⁶ Pa, avec obtention d'un mélange de produits.

8. Procédé continu pour la préparation d'un polyamide par réaction d'au moins un dinitrile et d'au moins une diamine avec de l'eau, comprenant les étapes suivantes:
(1) Réaction d'au moins un dinitrile et d'au moins une amine avec de l'eau, à une température de 90 à 400°C et une pression de 0,1 à 35 x 10⁶ Pa, dans un tube à écoulement, contenant un catalyseur acide de Brônsted, choisi parmi un catalyseur de β-zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, avec obtention d'un mélange réactionnel,
(2) Poursuite de la réaction du mélange réactionnel à une température de 150 à 400°C et une pression inférieure à la pression dans l'étape 1, pouvant être entreprise en présence d'un catalyseur acide de Brônsted, choisi parmi un catalyseur de β -zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de manière que l'on obtienne une première phase gazeuse et une première phase liquide ou une première phase solide ou un mélange de première phase solide et de première phase liquide, et la première phase gazeuse est séparée de la première phase liquide ou de la première phase solide ou du mélange de première phase liquide et de première phase solide, et
(3) Mélange de la première phase liquide ou de la première phase solide ou du mélange de première phase liquide et de première phase solide avec une phase gazeuse ou liquide, qui contient de l'eau, à une température de 150 à 370°C et une pression de 0,1 à 30 x 10⁶ Pa, dans un tube à écoulement contenant un catalyseur acide de Brônsted, choisi parmi un catalyseur de β-zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, avec obtention d'un mélange de produits.

9. Procédé selon la revendication 7 ou 8, contenant en outre l'étape suivante:
(4) Post-condensation du mélange de produits à une température de 200 à 350°C et une pression inférieure à celle de l'étape 3, la température et la pression étant choisies de manière que l'on obtienne une deuxième phase gazeuse contenant de l'eau et de l'ammoniac et une deuxième phase liquide ou une deuxième phase solide ou un mélange de deuxième phase liquide et de deuxième phase solide, contenant à chaque fois le polyamide.

10. Procédé continu de préparation d'un polyamide par réaction d'au moins un dinitrile et d'au moins une diamine avec de l'eau, comprenant les étapes suivantes:
(1) Réaction d'au moins un dinitrile et d'au moins une aminé avec de l'eau, à une température de 90 à 400°C et une pression de 0,1 à 35 x 10⁶ Pa, dans un tube à écoulement, contenant un catalyseur acide de Brônsted, choisi parmi un catalyseur de β-zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, avec obtention d'un mélange réactionnel,
(2) Poursuite de la réaction du mélange réactionnel à une température de 150 à 400°C et une pression inférieure à la pression dans l'étape 1, pouvant être entreprise en présence d'un catalyseur acide de Brönsted, choisi parmi un catalyseur de β -zéolithe, de silicate lamellaire ou de dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène, la température et la pression étant choisies de manière que l'on obtienne une première phase gazeuse et une première phase liquide ou une première phase solide ou un mélange de première phase solide et de première phase liquide, et la première phase gazeuse est séparée de la première phase liquide ou de la première phase solide ou du mélange de première phase liquide et de première phase solide, et
(4) Post-condensation de la première phase liquide ou de la première phase solide ou du mélange de première phase liquide et de première phase solide à une température de 200 à 350°C et une pression inférieure à celle de l'étape 3, la température et la pression étant choisies de manière que l'on obtienne une deuxième phase gazeuse contenant de l'eau et de l'ammoniac et une deuxième phase liquide ou une deuxième phase solide ou un mélange de deuxième phase liquide et de deuxième phase solide, contenant à chaque fois le polyamide.

11. Procédé selon l'une des revendications 7 à 10, dans lequel, dans l'étape 1 ou dans l'étape 3, ou bien tant dans l'étape 1 que dans l'étape 3, la température et la pression sont choisies de manière que l'on obtienne une phase liquide ou une phase solide ou un mélange de phase liquide et de phase solide, et une phase gazeuse, et la phase gazeuse est séparée.

12. Procédé selon l'une des revendications 7 à 11, dans lequel la réaction selon l'étape 1 a lieu avec une proportion molaire du total de dinitrile et de diamine par rapport à l'eau est de 1 : 1 à 1 : 30.

13. Procédé selon l'une des revendications 7 à 12, dans lequel, dans l'étape 3, la phase gazeuse ou liquide, qui contient de l'eau, est ajoutée en une quantité de 50 à 1500 ml d'eau pour 1 kg de première phase liquide ou de première phase solide ou de mélange de première phase liquide et de première phase solide.

14. Procédé selon l'une des revendications 7 à 13, dans lequel au moins d'une des phases gazeuses contenues dans les étapes respectives est recyclée dans au moins une des étapes qui précèdent.

15. Procédé selon l'une des revendications 1 à 14, dans lequel on fait réagir comme dinitrile un dinitrile α,ω-alkylénique comportant un reste alkylène (-CH₂-) ayant de 3 à 11 atomes de C ou un dinitrile d'alkylaryle ayant de 7 à 12 atomes de C.

16. Procédé selon l'une des revendications 1 à 15, où l'on met en oeuvre comme dinitrile de I'adiponitrile.

17. Procédé selon l'une des revendications 1 à 16, dans lequel on met en oeuvre comme diamine une α,ω-alkylènedjamine comportant un reste alkylène (-CH₂) ayant de 3 à 14 atomes de C ou une alkylaryldiamine ayant de 9 à 14 atomes de C.

18. Procédé selon l'une des revendications 1 à 17, dans lequel on met en oeuvre comme diamine de l'hexaméthylènediamine.

19. Procédé selon l'une des revendications 1 à 18, dans lequel on met en oeuvre le mélange suivant:
| | |
|---|---|
| de 50 à 99,99% en poids | de dinitrile et de diamine au total, |
| de 0,01 à 50% en poids | d'au moins un acide dicarboxylique, choisi dans le groupe formé par des acides α,ω- dicarboxyliques aliphatiques en C₄ à C₁₀, des acides dicarboxyliques aromatiques en C₈ à C₁₂ et des acides cycloalcane-dicarboxyliques en C₅ à C₈, |
| de 0 à moins de 50% en poids | d'un aminonitrile et |
| de 0 à 50% en poids | d'un α,ω-aminoacide en C₅ à C₁₂ ou du lactame correspondant, |
| de 0 à 10% en poids | d'au moins un acide inorganique ou d'un de ses sels, |
la somme des indications de pourcentages en poids individuels totalisant 100% en poids.

20. Procédé selon l'une des revendications 1 à 19, dans lequel on met en oeuvre la diamine dissoute dans de l'eau.
